# EUROPÄISCHE PATENTSCHRIFT

(11) **EP 0 841 197 B1**
(45) Veröffentlichungstag und Bekanntmachung des Hinweises auf die Patenterteilung: **21.05.2003**
(21) Anmeldenummer: 96120232.2
(22) Anmeldetag: 17.12.1996
(51) Int. Cl.: B60B 3/04, B60B 1/08

(54) **Rad für ein Kraftfahrzeug**
Wheel for a motor vehicle
Roue pour véhicule automobile

(30) Priorität: 06.11.1996 DE 19645639
(43) Veröffentlichungstag der Anmeldung: 13.05.1998
(73) Patentinhaber: Dr.Ing.h.c. F. Porsche Aktiengesellschaft, 70435 Stuttgart (DE)
(72) Erfinder: Stach, Jens, 71735 Eberdingen (DE); Separautzki, Reinhold, 71696 Möglingen (DE)

(56) Entgegenhaltungen:
- EP-A- 0 552 436
- WO-A-96/25296
- AT-B- 107 890
- DE-A- 2 639 483

## Beschreibung

Die Erfindung bezieht sich auf ein Rad für ein Kraftfahrzeug nach dem Oberbegriff des Anspruchs 1.

Aus der EP 552 436 A1 ist ein gattungsgemässes Rad für ein Kraftfahrzeug mit mehreren radialen Hohlspeichen in einer Radschüssel bekannt , die mit einem Felgenbett verbunden ist. Die Radschüssel wird mit einem umgeformten Felgenbett im Bereich eines Felgenhornes verbunden. In der Hohlspeiche ist jeweils eine sich radial von der Radmittenachse nach außen erstreckende Verstärkungsrippe angeordnet, die zwei gegenüberliegende Wandungen der Speiche miteinander verbindet.

Aus der WO 96/25296 A1 ist ein Rad für ein Kraftfahrzeug mit einer Innenschale und einer Außenschale bekannt, welche zwischen sich Hohlspeichen bilden und jeweils Wandungen mit Luftöffnungen besitzen und fest miteinander verbunden sind. Im Bereich zwischen den Luftöffnungen sind Versteifungsrippen vorgesehen, die als sich kreuzende Stege und als Kreisrippe konzentrisch zur Radnabe ausgebildet sind.

Des weiteren ist aus der AT 107 890 ein Fahrzeugrad bekannt, das aus mehreren Schalenteilen besteht, zwischen Hohlspeichen Luftöffnungen aufweist und die Schalenteile ineinander gesteckt werden. Eine Verbindung der Schalenteile erfolgt über die Radbolzen.

Die Aufgabe der Erfindung besteht darin, ein aus zwei Schalen bestehendes Fahrzeugrad mit einer optimalen Stabilität auszubilden, und welches eine einfache Herstellungsweise gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, dass durch die Anordnung von Rippen sowohl an der Innenfläche des Felgensterns als auch an der Innenfläche des Felgenbettes, insbesondere in Bereichen zwischen den Luftöffnungen und/oder in Bereichen der Schraubenaufnahmen und/oder in Bereichen der Nabe eine maximale Stabilität des Felgensterns und des Felgenbettes und somit des gesamten Rades erzielt wird.

Die Versteifungsrippen sind in relativ weichen Bereichen des Felgensterns und/oder des Felgenbettes angeordnet und bewirken eine definierte Versteifung, was insbesondere bei geringer Wandstärke erforderlich wird. Des weiteren sind die Art der Versteifungsrippen und deren Vielzahl auch abhängig von dem verwendeten Material des Felgensterns und des Felgenbettes. So sind beispielsweise bei einem Felgenstern aus einer Magnesiumlegierung mehrere Versteifungsrippen erforderlich, wobei bei einem Felgenstern aus einer Aluminiumlegierung weniger Versteifungsrippen erforderlich sind. Das gleiche gilt bei dem Felgenbett.

In Verbindung mit den Versteifungsrippen an der Innenfläche des Felgensterns ist eine die vorstehenden Schraubenaufnahmen verbindende Ringrippe vorgesehen, die konzentrisch zur Radnabe angeordnet ist und welche mit den Schraubenaufnahmen peripher verbunden ist.

Damit eine definierte Stabilität zwischen den Luftöffnungen des Felgensterns erzielbar ist, sind in diesen Bereichen mindestens zwei sich kreuzende Stege vorgesehen. Diese weisen eine Höhe auf, die etwa der halben Höhe der hochgezogenen Ränder der Luftöffnungen entspricht. Insbesondere ist die Höhe so vorgesehen, daß kein Anstoßen an der gegenüberliegenden abdeckenden Wand des Felgenbettes erfolgt.

Zusätzlich zu den sich kreuzenden Versteifungsrippen sind weitere Versteifungsrippen zwischen den Schraubenaufnahmen und den Rändern der Luftöffnungen vorgesehen. Die Versteifungsrippen ergänzen sich in vorteilhafter Weise insgesamt derart, daß der Bereich von den Schraubenaufnahmen aus und radial in die Hohlspeichen hinein zusätzlich versteift ist und darüber hinaus über die Ringrippe ein Festigkeitsverbund um die Radnabe herum sowie zwischen den Luftöffnungen entsteht.

Die Versteifungsrippen ergeben insgesamt annähernd ein geschlossenes Parallelogramm an das sich zwei Dreiecke gebildet durch die sich kreuzenden Abschnitte der Versteifungsrippen anschließen.

Der Felgenstern kann aus unterschiedlichen Materialen, wie eine Aluminiumlegierung, einer Magnesiumlegierung oder einer Titanlegierung oder aus einem Eisenmetall bestehen und in einem Gußverfahren, beispielsweise bei Leichtmetallmaterialien in einem Spritzgußverfahren oder einem anderen Herstellungsverfahren, wie einem Umformverfahren oder einem Pressverfahren hergestellt werden.

Das Felgenbett und der Felgenstern können aus einer Magnesium-Legierung bestehen. Denkbar ist auch eine Verwendung von einer Aluminium-Legierung für beide Radteile. Auch ist es möglich, das Felgenbett und den Felgenstern aus verschiedenen Materialien, wie einer Aluminium-Legierung oder einer Magnesium-Legierung herzustellen. So kann beispielsweise der Felgenstern aus einer Magnesium-Legierung und das Felgenbett aus einer Aluminium-Legierung bestehen oder der Felgenstern aus einer Aluminium-Legierung und das Felgenbett aus einer Magnesium-Legierung bestehen.

Die Versteifungsrippen werden je nach den auftretenden Belastungen am Rad örtlich an der Innenseite des Felgensterns plaziert. So sind auch mehrere längs- und/oder querverlaufende Versteifungsrippen im Bereich der Hohlspeichen möglich, die noch ergänzbar sind durch Rippen, Stege oder dergleichen in Bereichen zwischen den Luftöffnungen und dem Außenrand des Felgensterns. Auch sind ergänzende Rippen, Stege oder dergleichen im direkten Nabenbereich zwischen der konzentrischen Versteifungsrippe und der Radnabe möglich, wobei auch eine weitere konzentrische Versteifungsrippe zwischen den Schraubenaufnahmen, diese miteinander verbindend, denkbar sein kann.

Ausführungsbeispiele der Erfindung sind in den Zeichnungen dargestellt und werden im folgenden näher beschrieben.

Es zeigen
- Fig. 1: eine Innenansicht eines Felgensterns mit einer Verrippung im Nabenbereich sowie zwischen den Luftöffnungen,

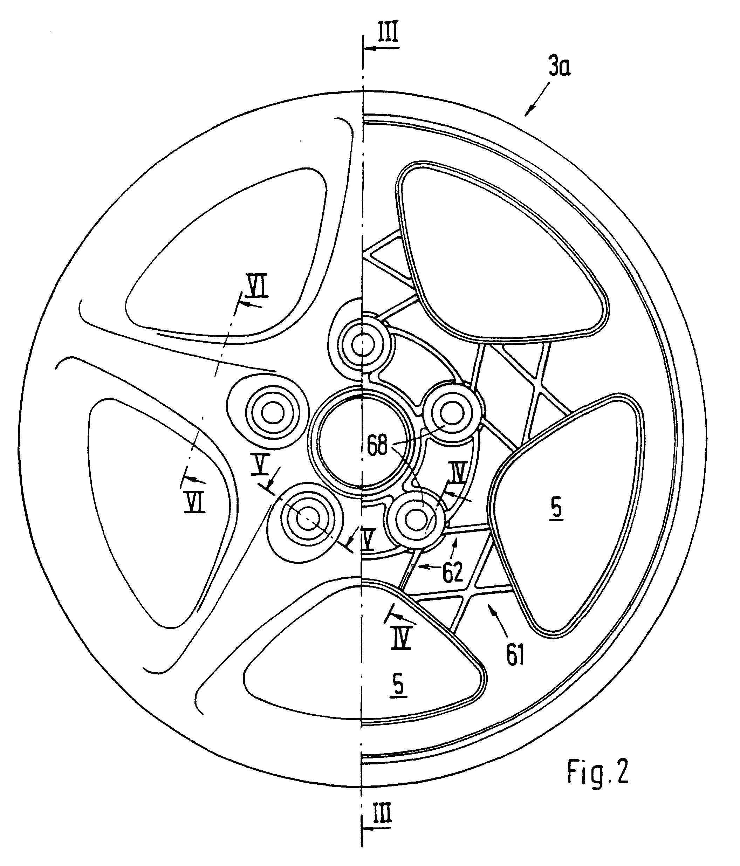

- Fig. 2: eine Innen- und Außenansicht des Felgensterns mit Verrippungen,
- Fig. 3: einen Schnitt nach der Linie III-III der Fig. 2,
- Fig. 4: einen Schnitt nach der Linie IV-IV der Fig. 2,
- Fig. 5: einen Schnitt nach der Linie V-V der Fig. 2,
- Fig. 6: einen Schnitt nach der Linie VI-VI der Fig. 2,
- Fig. 7: eine Ansicht auf ein aus dem Felgenstern und einem Felgenbett bestehenden Rad in einem verbundenen Zustand, wobei Ansichten auf die Innen- und Außenseite des Felgenbettes und des Felgensterns gezeigt sind,
- Fig. 8: einen Schnitt nach der Linie VIII-VIII der Fig. 7,
- Fig. 9: einen Schnitt nach der Linie IX-IX der Fig. 8,
- Fig. 10: eine Innenansicht auf einen Felgenstern mit Versteifungsrippen und den Schraubenaufnahmen,
- Fig. 11: eine Ansicht auf das Felgenbett von innen her in Richtung Z gesehen,
- Fig. 12: einen Schnitt durch die zusammengebauten Radteile mit Versteifungsrippen und Kreisringrippe und
- Fig. 13: einen Schnitt nach der Linie XIII-XIII der Fig. 12.

Ein Rad 1 für ein Kraftfahrzeug besteht im wesentlichen aus zwei Schalenteilen 2, 3, wobei das eine Schalenteil 3 den Felgenstern 3a und das weitere Schalenteil 2 das Felgenbett 2a bildet. Diese Schalenteile 2 und 3 sind miteinander verbunden. Durch Ausformungen der Schalenteile 2 und 3 in Bereichen zwischen Luftöffnungen 5 und 11 im Felgenstern 3a und im Felgenbett 2a bilden sich beim Zusammensetzen Hohlspeichen H und desweiteren bilden sich Ringräume R1 und R2 aus.

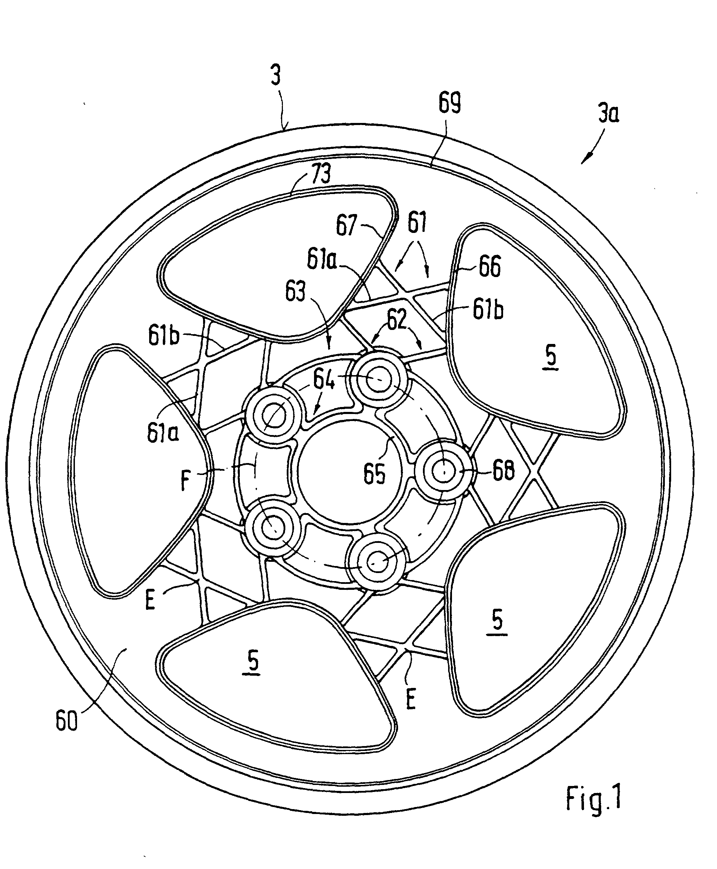

Der Felgenstern 3a weist an seiner Innenfläche 60 Versteifungsrippen 61, 62, 63, 64 und eine Radnabe 65 auf. Diese Rippen können wahlweise einzeln zusammen oder in Kombination angeordnet werden. In Fig. 1 is eine komplette Anordnung dieser Versteifungsrippen mit Radnabe im Felgenstern 3a gezeigt.

Die Versteifungsrippen 61 bestehen aus sich kreuzenden Stegen, die einerseits endseitig an hochgestellten Öffnungsrändern 66 und 67 von benachbarten Luftöffnungen 5 und andererseits an der Innenfläche 60 des Felgensterns 3a angebunden sind.

Die weiteren Versteifungsrippen 62 sind divergierend mit einem stumpfen Winkel von vorstehenden Schraubenaufnahmen 68, zu den Öffnungsrändern 66 und 67 hingeführt.

Über eine konzentrisch zur Radnabe 65 angeordnete Ringrippe 63 sind die Schraubenaufnahmen 68 untereinander verbunden. Zwischen der Radnabe 65 und den Schraubenaufnahmen 68 sind radiale Rippen 64 vorgesehen, die sowohl mit der Radnabe 65 als auch mit der Schraubenaufnahme 68 verbunden werden.

Die beiden sich kreuzenden Versteifungsrippen 61 sind aus zwei unter einem spitzen Winkel zueinander angeordneten Stegen gebildet. Abschnitte 61a und 61 b der Rippen 61 bilden mit den divergierend angeordneten beiden weiteren Rippen 62 mindestens die Form eines Parallelogramms. Der Kreuzungspunkt E der Rippen 61 liegt auf einer durch den Radmittelpunkt verlaufenden Ebene, die in gleichem Abstand zu den Öffnungsrändern 66, 67 liegt.

In Abhängigkeit vom verwendeten Werkstoff für den Felgenstern 3a werden mehr oder weniger Versteifungsrippen verwendet. So ist bei einem Felgenstern 3a aus einer Magnesiumlegierung eine stärkere Verrippung erforderlich als beispielsweise bei einem Felgenstern 3a aus einer Aluminiumlegierung. Desweiteren wird ebenfalls eine stärkere Verrippung bei geringen Wandstärken erforderlich.

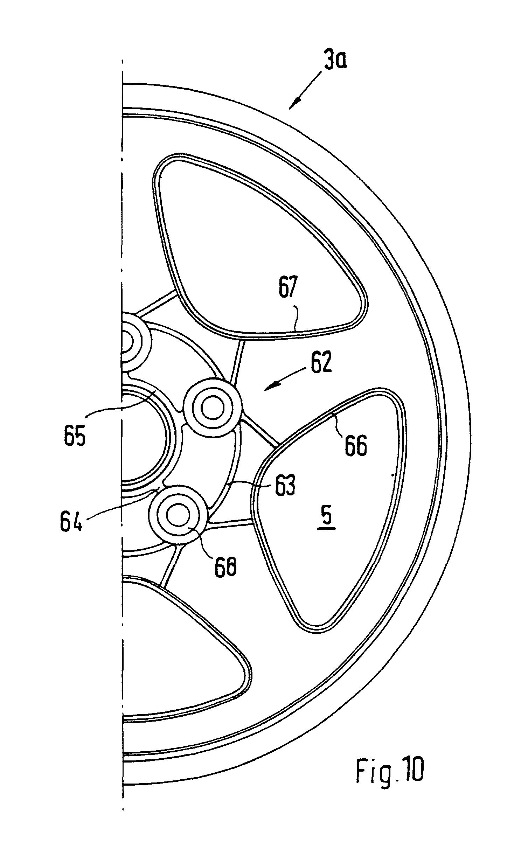

In Fig. 1 is beispielsweise ein Felgenstern 3a aus einer Magnesiumlegierung mit einer maximalen Verrippung über die Versteifungsrippen 61, 62, 63 und 64 gezeigt. Dagegen ist in Fig. 10 ein Felgenstern 3a aus einer Aluminiumlegierung gezeigt, der nur die Versteifungsrippen 62, 63 und 64 aufweist, wobei die Versteifungsrippen 63 eine Ringrippe darstellt und die Versteifungsrippen 64 radiale Rippen bilden.

Die Versteifung des Felgensterns 3a kann auch über mehrere sich kreuzende Rippen 61 ergänzt werden. Denkbar sind auch Längs- und/oder Querrippen zwischen benachbarten Luftöffnungen 5 sowie sich bis zum Außenrand 69 erstreckende Rippen bzw. Rippen die zwischen dem oberen Öffnungsrand 71 und dem Außenrand 69 vorgesehen sind.

Die divergierenden Versteifungsrippen 62 haben einen schrägen oberen Randverlauf R von der Schraubenaufnahme 68 bis zum Öffnungsrand 66 bzw. 67 hin.

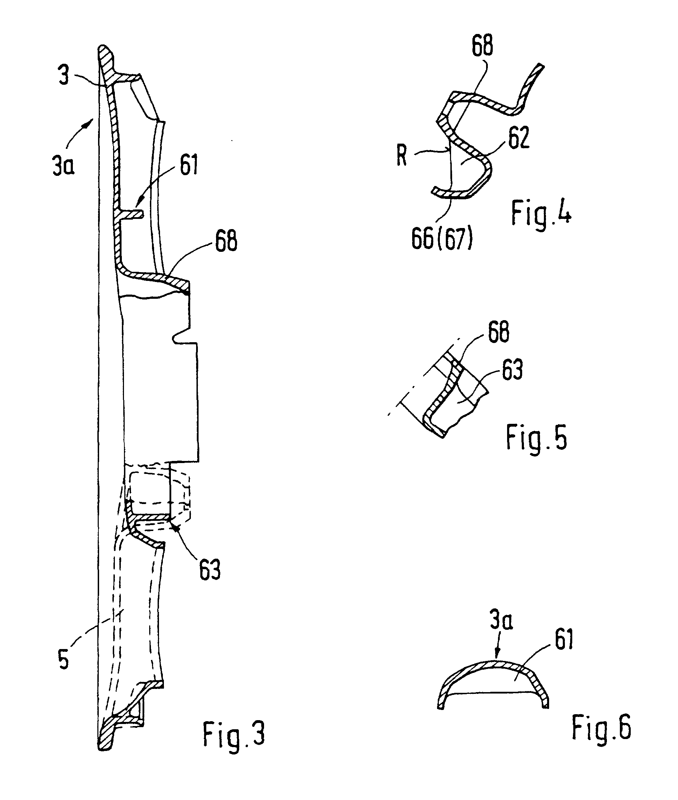

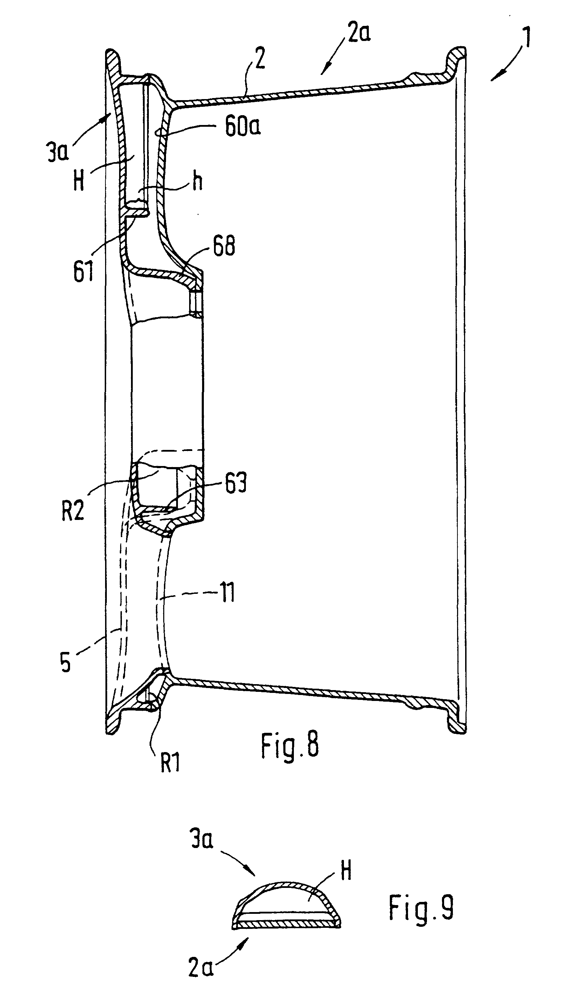

Wie in den Figuren 3 und 8 näher dargestellt ist, werden die Verstärkungsrippen 61 eine solche Höhe h aufweisen, daß noch ein Abstand zur Innenfläche 60a des Felgenbettes 2a vorhanden ist.

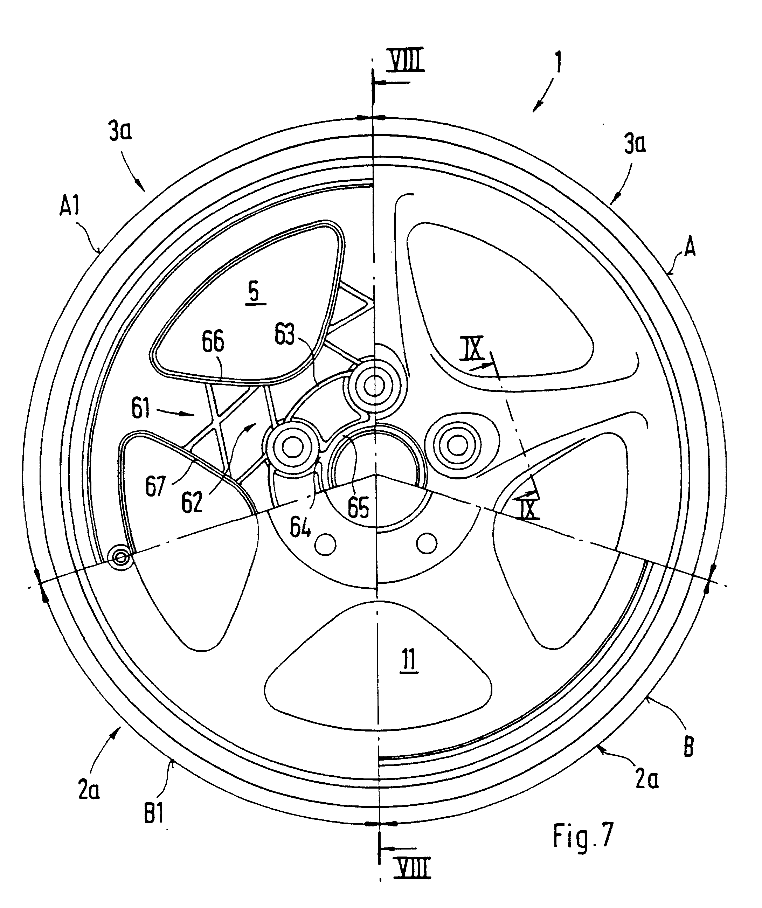

In Fig. 7 ist das Rad 1 insgesamt dargestellt, wobei der Abschnitt A des Felgensterns 3a von der Außenseite, der Abschnitt A1 des Felgensterns von der Innenseite und der Abschnitt B des Felgenbettes 2a von der Außenseite und der Abschnitt B1 des Felgenbettes 2a von der Innenseite her gezeigt ist.

Der Felgenstern 3a ist, wie in Fig. 9 näher gezeigt, im Bereich der Hohlspeichen H des Rades 1 etwa halbrundförmig ausgebildet. Der abdeckende Teil 2b des Felgenbettes 2a ist eben ausgeführt. Er kann aber ebenfalls halbrundförmig ausgebildet sind.

Ebenso wie der Felgenstern 3a kann auch das Felgenbett 2a an seiner Innenfläche 60a Versteifungsrippen 80 aufweisen. Diese Versteifungsrippen, bestehen zum einen aus sich kreuzenden Stegen zwischen benachbarter Luftöffnungen 11, die mit der weiteren Rippe 81, welche als Kreisringrippe 81a ausgeführt ist, zusammen verwendet werden oder es sind nur die Rippen 80 oder nur die Kreisringrippe 81a vorgesehen, was in Abhängigkeit von den verwendeten Materialien und den erforderlichen Festigkeiten erfolgt.

Die Kreisringripp 81a erstreckt sich konzentrisch zur Radmitte bzw. ist kozentrisch zur Radnabe 65 angeordnet.

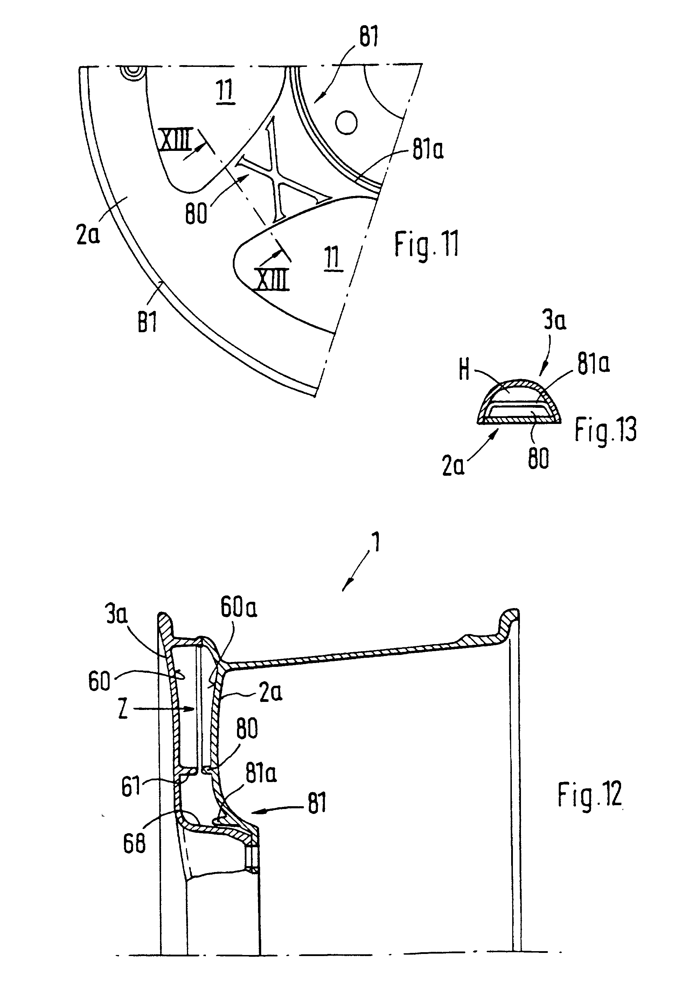

In Fig. 12 sind die sich kreuzenden Rippen 61 und 80 des Felgensterns 3a und des Felgenbettes 2a näher gezeigt. Sie stehen sich annähernd bzw. direkt gegenüber und weisen einen Abstand zwischen sich auf. Wie in Fig. 13 näher zu erkennen ist, enden die beiden Versteifungsrippen 80 stirnseitig vor der Wandung der Hohlrippe H im Felgenstern 3a, damit ein Zusammenpassen der Wandungen vom Felgenstern 3a und Felgenbett 2a zum Verbinden bzw. zum Schweißen problemlos erfolgen kann.

Die Kreisringrippe 81a ist hochgezogen und umgreift, wie Fig. 12 näher zeigt, die Schraubenaufnahmen 68 im Felgenstern außenseitig. Die Kreisringrippe 81a ist vorzugsweise geschlossen ausgeführt.

## Patentansprüche

1. Rad für ein Kraftfahrzeug mit einem Felgenstern, der zwischen seinen Hohlspeichen Luftöffnungen aufweist, und einem Felgenbett, **dadurch gekennzeichnet, dass** die axiale Außenwand des Felgensterns als ein erstes Schalenteil (3) und das Felgenbett und die axiale Innenwand des Felgensterns als ein zweites Schalenteil (2) ausgebildet sind, die durch wenigstens eine Verbindung miteinander verbunden sind, wobei sich zwischen zusammentreffenden Wandbereichen der Schalenteile radial verlaufende Hohlspeichen (H) sowie mindestens ein radial äußerer und ein radial innerer Ringraum (R1, R2) ausbilden, wobei das zweite Schalenteil (3) an seiner Innenfläche (60) Versteifungsrippen (60, 62, 63, 64, 65) aufweist, die jeweils in einem Bereich innerhalb der Hohlspeichen und/oder jeweils in einem weiteren Bereich zwischen Schraubenaufnahmen (68) und den Luftöffnungen (5) angeordnet sind.

2. Rad für ein Kraftfahrzeug mit einem Felgenstern, der zwischen seinen Hohlspeichen Luftöffnungen aufweist, und einem Felgenbett, **dadurch gekennzeichnet, dass** die axiale Außenwand des Felgensterns als ein erstes Schalenteil (3) und das Felgenbett und die axiale Innenwand des Felgensterns als ein zweites Schalenteil (2) ausgebildet sind, die durch wenigstens eine Verbindung miteinander verbunden sind, wobei sich zwischen zusammentreffenden Wandbereichen der Schalenteile radial verlaufende Hohlspeichen (H) sowie mindestens ein radial äußerer und ein radial innerer Ringraum (R1, R2) ausbilden, wobei das erste Schalenteil (2) an einer Innenfläche (60a) Versteifungsrippen (80, 82) aufweist, die einerseits als sich kreuzende Stege in einem Bereich innerhalb der Hohlspeichen und als Kreisringsrippe (81a) konzentrisch zur Radnabe (65), die Schraubenaufnahmen (68) von außen umschließend, angeordnet sind.

3. Rad nach den Ansprüchen 1 oder 2, **dadurch gekennzeichnet, daß** an den Innenflächen (60, 60a) des Felgenbettes (2a) und des Felgensterns (3a) Versteifungsrippen (61 bis 65 und 80, 81) angeordnet sind.

4. Rad nach den Ansprüchen 1 oder 3, **dadurch gekennzeichnet, daß** die Schraubenaufnahmen (68) untereinander über mindestens eine konzentrisch angeordnete äußere Ringrippe (63) miteinander verbunden sind, und eine weitere innere Ringrippe (65) eine Radnabe und die äußere Ringrippe als Versteifungsrippe (63) ausgebildet ist.

5. Rad nach den Ansprüchen 1, 3 oder 4, **dadurch gekennzeichnet, daß** die Versteifungsrippen (61) zwischen benachbarten Luftöffnungen (5) aus mindestens zwei sich kreuzenden Stegen bestehen, die jeweils mit gegenüberliegenden Öffnungsrändern (66, 67) der Luftöffnungen (5) sowie mit der Innenfläche (60) des Felgensterns (3a) verbunden sind.

6. Rad nach einem oder mehreren der vorhergehenden Ansprüche, **dadurch gekennzeichnet, daß** die sich kreuzenden Verstärkungsrippen (61) etwa eine halbe Höhe (h) von den hochgezogenen Öffnungsrändern (66, 67) der Luftöffnungen (5) aufweisen.

7. Rad nach einem oder mehreren der vorhergehenden Ansprüche, **dadurch gekennzeichnet, daß** zwischen den Schraubenaufnahmen (68) und der Radnabe (65) des Felgensterns (3a) radial verlaufende Versteifungsrippen (64) angeordnet sind.

8. Rad nach einem oder mehreren der vorhergehenden Ansprüche, **dadurch gekennzeichnet, daß** die Schraubenaufnahmen (68) auf einem Fußkreis (F) zwischen den Luftöffnungen (5) und der Radnabe (65) angeordnet sind und mindestens zwei Versteifungsrippen (62) von den Schraubenaufnahmen (68) zu den Öffnungsrändern (66, 67) der Luftöffnungen (5) verlaufen.

9. Rad nach einem oder mehreren der vorhergehenden Ansprüche, **dadurch gekennzeichnet, daß** Abschnitte (61a und 61b) der sich kreuzenden Versteifungsrippen (61) und die beiden Versteifungsrippen (62) an der Schraubenaufnahme (68) etwa die geometrische Form eines Parallelogramms ergeben.

10. Rad nach einem oder mehreren der vorhergehenden Ansprüche, **dadurch gekennzeichnet, daß** die Versteifungsrippen (62) an den Schraubenaufnahmen (68) vom Öffnungsrand (66, 67) der Luftöffnungen (5) bis zur Schraubenaufnahme (68) schräg ansteigend verlaufende Kanten (R) aufweisen.

11. Rad nach den Ansprüchen 1, 2, 4, 7, 8 und 10, **dadurch gekennzeichnet, daß** der Felgenstern (3a) aus einer Aluminiumlegierung besteht und sich von den Schraubenaufnahmen (68) bis zum Rand (66, 67) der Luftöffnungen (5) hin erstreckende Versteifungsrippen (62) aufweist.

12. Rad nach den Ansprüche 1 bis 11, **dadurch gekennzeichnet, daß** der Felgenstern (3a) aus einer Magnesiumlegierung besteht.

13. Rad nach den Ansprüchen 1 oder 4 bis 11, **dadurch gekennzeichnet, daß** bei einer Verwendung von einer Magnesiumlegierung für den Felgenstern (3a) die Rippen (61, 62) sowie die konzentrische Ringrippe (63) und die Rippen (64) an der Radnabe (65) vorgesehen sind.

14. Rad nach den Ansprüchen 1, 2 oder 3, **dadurch gekennzeichnet, daß** für das Felgenbett (2a) und den Felgenstern (3a) eine Magnesium-Legierung verwendet wird.

15. Rad nach den Ansprüchen 1, 2 oder 3, **dadurch gekennzeichnet, daß** für das Felgenbett (2a) und den Felgenstern (3a) eine Aluminium-Legierung verwendet wird.

16. Rad nach den Ansprüchen 1, 2 oder 3, **dadurch gekennzeichnet, daß** für das Felgenbett (2a) und den Felgenstern (3a) in Kombination für diese Radteile eine Aluminium-Legierung und eine Magnesium-Legierung verwendet werden.

## Claims

1. A wheel for a motor vehicle with a rim spider, which has air openings between its hollow spokes, and a rim base, **characterized in that** the axial outer wall of the rim spider is constructed in the form of a first shell part (3) and the rim base and the axial inner wall of the rim spider are constructed in the form of a second shell part (2), which are connected to each other by at least one connexion, wherein hollow spokes (**H**) extending radially and at least one radially outer and one radially inner annular space (**R1, R2**) are formed between wall areas of the shell parts which meet, wherein the inner face (60) of the second shell part (2) has reinforcement ribs (61, 62, 63, 64, 65) which are each arranged in a respective region inside the hollow spokes and/or in a further respective region between bolt-receiving means (68) and the air openings (5).

2. A wheel for a motor vehicle with a rim spider, which has air openings between its hollow spokes, and a rim base, **characterized in that** the axial outer wall of the rim spider is constructed in the form of a first shell part (3) and the rim base and the axial inner wall of the rim spider are constructed in the form of a second shell part (2), which are connected to each other by at least one connexion, wherein hollow spokes (**H**) extending radially and at least one radially outer and one radially inner annular space (**R1, R2**) are formed between wall areas of the shell parts which meet, wherein an inner face (60a) of the first shell part (3) has reinforcement ribs (80, 82) which are arranged on one side as mutually intersecting webs in a region inside the hollow spokes and as a circular annular rib (81a) concentrically to the wheel hub (65) embracing the bolt-receiving means (68) from the outside.

3. A wheel according to Claim 1 or 2, **characterized in that** reinforcement ribs (61 to 65 and 80, 81) are arranged on the inner faces (60, 60a) of the rim base (2a) and of the rim spider (3a).

4. A wheel according to Claim 1 or 3, **characterized in that** bolt-receiving means (68) are connected to one another by way of at least one outer annular rib (63) arranged concentrically, and a further inner annular rib (65) is constructed [in the form off a wheel hub and the outer annular rib is constructed in the form of a reinforcement rib (63).

5. A wheel according to Claim 1, 3 or 4, **characterized in that** the reinforcement ribs (61) between adjacent air openings (5) comprise at least two mutually intersecting webs which are connected in each case to opposite opening edges (66, 67) of the air openings (5) as well as to the inner face (60) of the rim spider (3a).

6. A wheel according to one or more of the preceding Claims, **characterized in that** the mutually intersecting reinforcement ribs (61) are substantially half the height (h) of the raised opening edges (66, 67) of the air openings (5).

7. A wheel according to one or more of the preceding Claims, **characterized in that** reinforcement ribs (64) extending radially are arranged between the bolt-receiving means (68) and the wheel hub (65) of the rim spider (3a).

8. A wheel according to one or more of the preceding Claims, **characterized in that** the bolt-receiving means (68) are arranged on a root circle **(F)** between the air openings (5) and the wheel hub (65), and at least two reinforcement ribs (62) extend from the bolt-receiving means (68) to the opening edges (66, 67) of the air openings (5).

9. A wheel according to one or more of the preceding Claims, **characterized in that** portions (61a and 61b) of the mutually intersecting reinforcement ribs (61) and the two reinforcement ribs (62) on the bolt-receiving means (68) form substantially the geometrical shape of a parallelogram.

10. A wheel according to one or more of the preceding Claims, **characterized in that** the reinforcement ribs (62) on the bolt-receiving means (68) have edges (**R**) extending in an obliquely ascending manner from the opening edge (66, 67) of the air openings (5) as far as the bolt-receiving means (68).

11. A wheel according to Claims 1, 2, 4, 7, 8 and 10, **characterized in that** the rim spider (3a) consists of an aluminium alloy and has reinforcement ribs (62) extending from the bolt-receiving means (68) as far as the edge (66, 67) of the air openings (5).

12. A wheel according to Claims 1 to 11, **characterized in that** the rim spider (3a) consists of a magnesium alloy.

13. A wheel according to Claims 1 or 4 to 11, **characterized in that** when a magnesium alloy is used for the rim spider (3a) the ribs (61, 62) as well as the concentric annular rib (63) and the ribs (64) are provided on the wheel hub (65).

14. A wheel according to Claim 1, 2 or 3, **characterized in that** a magnesium alloy is used for the rim base (2a) and the rim spider (3a).

15. A wheel according to Claim 1, 2 or 3, **characterized in that** an aluminium alloy is used for the rim base (2a) and the rim spider (3a).

16. A wheel according to Claim 1, 2 or 3, **characterized in that** for the rim base (2a) and the rim spider (3a) an aluminium alloy and a magnesium alloy are used in combination for these wheel parts.

## Revendications

1. Roue pour véhicule automobile avec une étoile de jante, qui présente des orifices d'air entre ses rayons creux, et un lit de jante, **caractérisée en ce que** la paroi axiale extérieure de l'étoile de jante est réalisée en tant que que première partie de coquille (3) et le lit de jante et la paroi axiale intérieure de l'étoile de jante en tant que deuxième partie de coquille (2) qui sont reliées entre elles par au moins une liaison, des rayons creux (H) s'étendant radialement ainsi qu'au moins un espace annulaire radialement extérieur (R1) et un espace annulaire radialement intérieur (R2), se formant entre des zones de paroi, qui se réunissent, des parties de coquille, la deuxième partie de coquille (3) présentant, sur sa face intérieure (60), des nervures de renfort (60, 62, 63, 64, 65) qui sont disposées chacune dans une autre zone entre des logements de vis (68) et les orifices d'air (5).

2. Roue pour un véhicule automobile avec une étoile de jante, qui présente des orifices d'air entre ses rayons creux, et un lit de jante, **caractérisée en ce que** la paroi axiale extérieure de l'étoile de jante est réalisée en tant que que première partie de coquille (3) et le lit de jante et la paroi axiale intérieure de l'étoile de jante en tant que deuxième partie de coquille (2) qui sont reliées entre elles par au moins une liaison, des rayons creux (H) s'étendant radialement ainsi qu'au moins un espace annulaire radialement extérieur (R1) et un espace annulaire radialement intérieur (R2) se formant entre des zones de paroi, qui se réunissent, des parties de coquille, la première partie de coquille (2) présentant, sur une face intérieure (60a), des nervures de renfort (80, 82) qui sont disposées d'une part en tant que barrettes se croisant dans une zone située à l'intérieur des rayons creux et en tant que nervure en anneau circulaire (81a), concentriquement au moyeu de roue (65), en enfermant les logements de vis (68) de l'extérieur.

3. Roue selon les revendications 1 ou 2, **caractérisée en ce que** sur les surfaces intérieures (60, 60a) du lit de jante (2a) et d'étoile de jante (3a) sont disposées des nervures de renfort (61 à 65 et 80, 81).

4. Roue selon les revendications 1 ou 3, **caractérisée en ce que** les logements de vis (68) sont reliés entre eux par au moins une nervure annulaire (63) extérieure disposée concentriquement, et une autre nervure annulaire intérieure (65) forme un moyeu de roue et la nervure annulaire extérieure est réalisée en tant que nervure de renfort (63).

5. Roue selon les revendications 1, 3 ou 4, **caractérisée en ce que** les nervures de renfort (61) entre des orifices d'air (5) voisins sont constituées d'au moins deux barrettes se croisant qui sont reliées chacune à des bords d'ouverture (66, 67) opposés des orifices d'air (5) ainsi qu'à la surface intérieure (60) de l'étoile de jante (3a).

6. Roue selon une ou plusieurs des revendications précédentes, **caractérisée en ce que** les nervures de renfort (61) se croisant présentent approximativement une demi-hauteur (h) des bords d'ouverture (66, 67) relevés des orifices d'air (5).

7. Roue selon l'une ou plusieurs des revendications précédentes, **caractérisée en ce que** des nervures de renfort (64) s'étendant radialement sont disposées entre les logements de vis (68) et le moyeu de roue (65) de l'étoile de jante (3a).

8. Roue selon une ou plusieurs des revendications précédentes, **caractérisée en ce que** les logements de vis (68) sont disposés sur un cercle de pied (F) entre les orifices d'air (5) et le moyeu de roue (35) et au moins deux nervures de renfort (62) s'étendent depuis les logements de vis (68) jusqu'aux bords (66, 67) des orifices d'air (5).

9. Roue selon une ou plusieurs des revendications précédentes, **caractérisée en ce que** des tronçons (61a et 61b) des nervures de renfort (61) se croisant et les deux nervures de renfort (62) sur le logement de vis (68) donnent approximativement la forme géométrique d'un parallélogramme.

10. Roue selon une ou plusieurs des revendications précédentes, **caractérisée en ce que** les nervures de renfort (62) dans les logements de vis (68) présentent des arêtes (R) qui s'étendent obliquement en montant depuis le bord (66, 67) des orifices d'air (5) jusqu'au logement de vis (68).

11. Roue selon les revendications 1, 2, 4, 7, 8 et 10, **caractérisée en ce que** l'étoile de jante (3a) est constituée d'un alliage d'aluminium et comporte des nervures de renfort (62) qui s'étendent depuis les logements de vis (68) jusqu'au bord (66, 67) des orifices d'air (5).

12. Roue selon les revendications 1 à 11, **caractérisée en ce que** l'étoile de jante (3a) est constituée d'un alliage de magnésium.

13. Roue selon les revendications 1 ou 4 à 11, **caractérisée en ce que** dans le cas où l'on utilise un alliage de magnésium pour l'étoile de jante (3a), les nervures (61, 62) ainsi que la nervure annulaire (63) concentrique et les nervures (64) sont prévues sur le moyeu de roue (65).

14. Roue selon les revendications 1, 2 ou 3, **caractérisée en ce qu'**on utilise un alliage de magnésium pour le lit de jante (2a) et l'étoile de jante (3a).

15. Roue selon les revendications 1, 2 ou 3, **caractérisée en ce qu'**on utilise un alliage d'aluminium pour le lit de jante (2a) et l'étoile de jante (3a).

16. Roue selon les revendications 1, 2 ou 3, **caractérisée en ce que** pour le lit de jante (2a) et l'étoile de jante (3a) on utilise, en combinaison pour ces parties de roue, un alliage d'aluminium et un alliage de magnésium.
